Europäisches Patentamt

European Patent Office

Office européen des brevets

(11) Publication number: **0 172 957**

**B1**

## EUROPEAN PATENT SPECIFICATION

(45) Date of publication of patent specification: **14.03.90**

(21) Application number: **84305884.3**

(22) Date of filing: **29.08.84**

(51) Int. Cl.⁵: **C 08 L 61/06, C 08 K 7/02, C 08 J 5/04, F 02 K 9/34**

(54) Phenolic blast tube insulators for rocket motors.

(43) Date of publication of application:
**05.03.86 Bulletin 86/10**

(45) Publication of the grant of the patent:
**14.03.90 Bulletin 90/11**

(84) Designated Contracting States:
**DE FR GB**

(56) References cited:
**EP-A-0 074 838**
**GB-A- 757 890**
**US-A-4 119 036**

**CHEMICAL ABSTRACTS, vol. 83, no. 8, 25th August 1975, page 63, no. 60112m, Columbus, Ohio, US; R.W. FARMER: "Extended heating ablation of carbon phenolic and silica phenolic" & GOVT. REP ANNOUNCE. (U.S.) 1975, 75(1), 84**

**CHEMICAL ABSTRACTS, vol. 93, no. 18, 3rd November 1980, page 27, no. 168971m, Columbus, Ohio, US; C.G. GOETZEL: "High-temperature properties of some reinforced phenolic composites" & HIGH TEMP. - HIGH PRESSURES 1980, 12(2), 131-146**

(73) Proprietor: **HERCULES INCORPORATED**
**Hercules Plaza**
**Wilmington Delaware 19894 (US)**

(72) Inventor: **Herring, Liles Gail**
**810 Fairway Road Woodway**
**Waco Texas 76710 (US)**

(74) Representative: **De Minvielle-Devaux, Ian Benedict Peter et al**
**CARPMAELS & RANSFORD 43, Bloomsbury Square**
**London WC1A 2RA (GB)**

(56) References cited:

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to thermal heat shields or insulators for rocket motors, particularly for blast tubes and blast tube ramp sections, and more particularly to such insulators that are formed of cured phenolic resin in which fibrous reinforcement material is dispersed; and it relates to an improved process for making them.

A blast tube, positioned between the nozzle and propellant sections of tactical rocket motors, is normally a cylindrical conduit of smaller diameter than the motor that conveys the hot combustion products of the propellant to the nozzle. The converging section connecting the rocket motor and the blast tube proper is the blast tube ramp section. The blast tube insulator serves as a liner for the inner surfaces of these parts, to protect them from damage caused by the hot combustion products during the flight of the missile.

A blast tube insulator must have thermal properties, including char rates, that are consistent with its high temperature, erosive environment. Such insulators cna be molded from a commercially-available phenolic resin precursor containing 1.27 cm squares of carbon or silica cloth. However, they are expensive and difficult to process, and they require to be so highly filled with the carbon or silica cloth that they have high densities that unduly increase the inert weight carried by the rockets in which they are installed.

According to the invention, these deficiencies of the commercially-available reinforced materials are overcome by a rigid molded insulator formed from a cured phenolic-resin composition in which fibrous reinforcement material is dispersed, which fibrous reinforcement material comprises polyaramide pulp or carbon fibers or a combination of said pulp and fibers, and in which for each 100 parts by weight of cured phenolic resin in the composition, the insulator contains between 30 and 120 parts by weight of the said material and between 10 and 60 parts by weight of a finely divided siliceous inorganic particulate, the insulator having a density in a range between 1.14 and 1.495 Mg/m$^3$.

A method of preparing the blast tube insulator according to the invention is characterized in that the phenolic precursor for the cured phenolic resin is admixed with the inorganic particulate, preferably silica, and the fibrous reinforcement in the presence of a solvent for the precursor until a molding crumb having a diameter between 4 and 8 millimeters results, the crumb is dried by tumbling in dry air and loaded into a mold, and sufficient pressure to consolidate the crumb is applied to the crumb in the mold at a temperature between 93 and 232°C for a time sufficient to cure the precursor and form the insulator.

By employing relatively inexpensive silica particulate and carbon or polyaramide fibers to replace the more expensive chopped carbon or silica cloths of the commercially reinforced materials, the blast tube insulators according to the invention can be formulated to achieve unexpectedly lower levels of density, without any significant loss in other properties, including char rates. They also eliminate the difficulties involved in handling and chopping such cloths.

The phenolic resin precursor used in making the blast tube insulators of this invention is commercially available. The preferred phenolic resin materials are those sold as Resinox (registered trade mark) phenolics by Monsanto Chemical Company. Other phenolic resin materials suitable for this invention include those, which like the Resinox materials, cure by crosslinking a phenolic compound with formaldehyde or other such aldehyde or ketone acting as a difunctional linking moiety. The difunctional linking moiety links the phenolic groups in the phenolic resin materials to provide the crosslinking for the insulators. Hexamethylenetetramine is desirably included in the phenolic resin material for producing the formaldehyde for the cross-linking reaction.

For certain applications, particularly for insulating blast tube ramp sections, the phenolic resin precursor desirably contains up to 100 parts by weight per hundred parts by weight of the phenolic resin material of a cross-linked elastomeric polymer, such as one of the synthetic rubbers: for instance, ethylene propylene diene monomer (EPDM), polyurethane, chlorosulphonated polyethylene, and polychloroprene. These rubbery polymers are crosslinked by peroxy or other crosslinking agents included in the insulating materials.

(The expression "phr" is used in this description to mean "parts by weight per hundred parts by weight of the phenolic resin material").

The finely divided, inorganic particulate is included in the blast tube insulators in a range between 10—60 phr, preferably in a range between 15—50 phr. The inorganic filler preferably has a particle size of between 10 and 50 μm (average diameter), and more preferably between 20 and 40 μm in average diameter. The preferred inorganic filler is silica, particularly hydrated silica formed by precipitation. HiSil (registered trade mark) silica available from Harwick Chemical is the preferred inorganic particulate for use in insulators of this invention.

Other siliceous inorganic particulates can be used in accordance with this invention and include mica, glass, quartz and combinations thereof which may be used alone or together with the silica. Preferably, however, the inorganic particulate consists essentially of silica, particularly hydrated silica of the particle size identified above.

The polyaramide pulp suitable for use in this invention is commercially available, being sold for example, by E. I. duPont as Kevlar (registered trade mark) aramide pulp fiber. The polyaramide pulp preferably is a short, highly fibrillated fiber in which the fibrillation is resultant of axially oriented, strong crystallites that are less strongly bonded transversely. Fibrillation of the pulp fiber leads to length to

diameter ratios (L/D) of over 500. An important advantage of these polyaramide pulps is their very high decomposition temperatures ranging above about 400°C. In addition, these polyaramide pulps are low density and decompose into a strong, adherent char.

The preferred polyaramide pulps have physical properties as set forth in Table I:

TABLE I

| | |
|---|---|
| Tensile strength MPa | 3000—4000 |
| Tensile modulus GPa | 75—100 |
| Elongation % | 3—5 |
| Density g/cc | 1.4—1.5 |
| Filament dia. μm | 10—14 |
| Degradation temp. | 400—600°C |
| Thermal expansion coefficient | $-2\times10^{-6}/°C$ |

Further characterization of suitable polyaramide pulps currently available for use in this invention are set forth in Table II below:

TABLE II

| | A* | B* | C* |
|---|---|---|---|
| +14 Mesh‡ | 16±5% | 4±2% | 4±2% |
| −14+30 Mesh | 22±5 | 17±3 | 17±3 |
| −30+50 Mesh | 25±3 | 33±5 | 33±5 |
| −50+100 Mesh | 19±4 | 26±2 | 26±2 |
| −100 Mesh | 17±5 | 20±4 | 20±4 |
| Nominal average length | 4 mm | 2 mm | 2 mm |

* Kevlar (registered trade mark) pulps sold by Dupont as Long Wet Lap, Merge 6F204; Short Wet Lap Merge 6F205; and Dry Pulp Merge 6F218, respectively.

‡ U.S. Standard Sieve sizes.

The dry pulp C is preferred for this invention. Drying of the other pulps B and C prior to compounding enhances their utility for use in this invention. The above characterizations of suitable polyaramide pulps is for exemplication only; other similar aromatic polyamides including, for example, polyaramide fibers can be suitably employed in this invention.

The carbon fiber useful as the fibrous reinforcement of the insulating materials is commercially available. The length of the fiber is preferably between 2 and 10 millimeters, e.g. between 4 and 8 mm, with diameters between 4 and 16 microns. The carbon fiber can be made by heating polyacrylonitrile or pitch filaments for a time sufficient to reduce the fiber to highly carbonized form followed by chopping the filaments into desired form.

Exemplary characteristics for carbon fiber suitable for use in this invention and made from polyacrylonitrile precursor fiber are set forth below in Table III:

TABLE III

| | |
|---|---|
| Tensile strength | 2,480 MPa |
| Tensile modulus | 206 GOa |
| Ultimate elongation | 1.2% |
| Density | 1.77 g/cm³ |
| Size content (% by weight) | 7% max. |
| Bulk density | 280 g/l |
| Filament diameter | 8 microns |
| Filament shape | Round |

The blast tube insulators of this invention can be made by blending the aforedescribed ingredients in dry form followed by introducing the dry blend into a mold. However, use of a dry blend of particulate can result in ingredient separation during handling and storage. Accordingly, the preferred compounding procedure uses an initial dry blending of the insoluble ingredients followed by addition of the phenolic resin materials dissolved in solvent. Use of a vertical planetary mixer device is preferred for this compounding. The addition of dissolved phenolic resin materials to the admixed particles over the period of mixing permits the phenolic resin materials to deposit on the inorganic and organic particulates in the mixture. These particulates, carrying the plated out phenolic resin material, tend to agglomerate during

3

mixing into small clumps. It is preferred that the clumps or crumbs are kept within a particle size of between 4 and 8 millimeters.

Exemplary solvents for this mixing procedure are low boiling polar solvents such as methylethylketone, acetone, and ethyl alcohol. After the crumb is formed, it is tumbled in dry air (temperature e.g. 16—27°C to remove the solvent.

Curing of the blast tube insulators is under pressure (e.g. 500—2000 psig (3.48—13.79 MPa)) at temperatures ranging between 93 and 232°C. A preferred cure cycle is cure at a temperature of between 93 and 107°C for between 1—3 hours followed by cure at temperatures in a range between 149 and 204°C for 1—3 hours. The cured insulators are preferably cooled before release of pressure. The aforementioned dual heating procedure followed by cooling in the mold reduces the probability of cracking during molding of the insulators.

The blast tube insulators of this invention preferably have densities between 1.439 and 1.495 Mg/m$^3$. This density is lower (e.g. 16%) than certain conventional phenolic blast tube insulators containing chopped carbon or silica cloth. The lower density coupled with comparable char rate performance leads to better insulators for the blast tubes.

Exemplary formulations A and B for the blast tube insulators of this invention are set forth in Table IV below (amounts are in parts by weight):

TABLE IV

| Ingredient | Formulation A | Formulation B |
|---|---|---|
| Phenolic resin materials | 100 | 100 |
| Carbon fiber | 40—120 | — |
| Polyaramide pulp | — | 40—120 |
| Silica particulate | 10—30 | 30—50 |

Certain preferred insulators of this invention have between 40 and 80 phr polyaramide pulp, between 10 and 30 phr of finely divided siliceous inorganic particulate and a density between 1.439 and 1.467 Mg/m$^3$; or between 80 and 120 phr of carbon fibres, between 30 and 50 phr of finely divided siliceous inorganic particulate and a density between 1.467 and 1.495 Mg/m$^3$; or between 40 and 80 phr of carbon fibres between 2 and 10 mm long and between 10 and 30 phr of finely divided siliceous inorganic particulate.

The following examples illustrate this invention but are not meant as a limitation thereof. In these examples, all parts are parts by weight unless specifically noted otherwise. As used in these examples, "Erosion Rate" is defined as the thickness of the insulator before test less the thickness after the test divided by action time where action time is the time between when the motor starts to exhaust at 7 kg/cm$^2$ and when the exhaust decreases to 7 kg/cm$^2$. "Chart Rate" is defined as the insulator thickness after the test minus the thickness after removal of char divided by the action time. "Decomposition Rate" is defined as the insulator thickness before the test minus the thickness after char removal divided by the action time. Erosion rate values derived from an accumulation rather than a removal of material during the test (such that the subtraction noted above would not lead to a positive number), are preceded by a plus (+) sign.

Example 1

Set forth in Table 1 below is a comparison between blast tube insulators of this invention (formulations A, B, C) and those of the prior art (D, E). As can be seen from data of this Table 1, the insulators of this invention can be lower in density and still have properties in two-inch (5.08 cm) rocket motor test firings that are comparable to those of insulators made from commercially-available material. All the insulators (A, B, C) of this invention in Table 1 were prepared by blending of the ingredients followed by molding at 10.34—13.79 MPa for 2—3 hours at about 177°C.

## TABLE 1

| Ingredient, phr | A | B | C | D[a] | E[a] |
|---|---|---|---|---|---|
| Phenolic resin[b] | 100.0 | 100.0 | 100.0 | | |
| Hydrated silica, precipitated[c] | 20.0 | 20.0 | 20.0 | | |
| Carbon fiber (1.55 cm)[d] | 50.0 | | | | |
| Carbon fiber[e] | | 50.0 | | | |
| Polyaramide pulp[f] | | | 100.0 | | |
| Silica cloth, chopped (1.27 cm sq) | | | | 400.0 | |
| Phenolic resin[g] | | | | 100.0 | |
| Phenolic resin[h] | | | | | 100.0 |
| Carbon cloth, chopped (1.27 cm sq) | | | | | 194.1 |
| Erosion data & mass flux of approx. .13 kg/sec-cm$^{2[i]}$ | | | | | |
| Erosion rate, mm/sec | .051 | .025 | .038 | +.152 | .127 |
| Decomposition rate, mm/sec | .356 | .114 | .178 | .737 | .254 |
| Char rate, mm/sec | .279 | .0762 | .1397 | .9144 | .127 |
| Density, mg/m$^3$ | 1.484 | 1.475 | 1.448 | 1.772 | 1.500 |

[a] Product of Fiberite Co. MX2646; MX4926.
[b] Resinox 755 product of Monsanto.
[c] HiSil product of P.P.G. Industries.
[d] Magnamite 1810 as product of Hercules Incorporated, passed through roll mills.
[e] Celion C-6 product of Celanese.
[f] Kevlar 29 pulp, type 979, merge 6F 218.
[g] Polyamide modified phenolic resin.
[h] Phenolic resin, MIL-R-9299, Type II.
[i] Data from two-inch (5.08 cm) motor firings.

The words "Resinox", "HiSil", "Magnamite" and "Kevlar" are understood to be registered trade marks.

As can be seen from the data on Table 1, the insulators of this invention (formulations A, B, C) have erosion, decomposition and char rates comparable to those of the prior art (formulations D, E). Since the density of the insulator of this invention is lower than the insulators made from commercially-available material, as can also be seen from Table 2, a smaller weight of insulation can be used, or a greater amount of low density insulation can be used to yield better performance at the same weight level.

Example 2

Set forth in Table 2 is a summary of data obtained in firing subscale rocket motors that were insulated in accordance with this invention (2A—2J) or with commercially-available material (MX2646, 4926). Table 3 shows the formulations of the blast tube insulators of Table 2. "Erosion Rate" and "Decomposition Rate" are defined as indicated above, as insulator thickness differences before and after testing divided by the action time, and erosion rate values derived from an accumulation rather than a removal of material during the test are preceded by a plus (+) sign.

As can be seen from Table 2 and 3, the blast tube insulators of this invention perform in a manner comparable to the insulators made of commercially-available material.

TABLE 2

| Formulation No. | Decomposition rate mm/sec mass flux | | | Erosion rate mm/sec mass flux | | | Density* Mg/m³ |
|---|---|---|---|---|---|---|---|
| | Low | Med. | High | Low | Med. | High | |
| 2A | .457 | .812 | .889 | +.102 | +.102 | .025 | 1.520 |
| 2B | .381 | .610 | .660 | .025 | .025 | .025 | 1.448 |
| 2C | .305 | .584 | .584 | +.711 | +.025 | .076 | 1.140 |
| MX-2646 | .381 | .457 | .533 | +.381 | +.381 | +.229 | 1.772 |
| 2D | .381 | .635 | .711 | +.737 | +.102 | .025 | 1.475 |
| 2E | .330 | .813 | .838 | +.330 | +.076 | .051 | 1.575 |
| 2F | .330 | .635 | .787 | +.203 | +.025 | .279 | 1.276 |
| MX-4926 | .356 | .686 | .914 | +.178 | .025 | .102 | 1.500 |
| 2G | .381 | .508 | .559 | .076 | .178 | .229 | 1.357 |
| 2H | .330 | .559 | .584 | .051 | .178 | .203 | 1.390 |
| 2O | .203 | .559 | .660 | .127 | .305 | .508 | 1.413 |
| 2J | .914 | 1.17 | 1.29 | .102 | .102 | .178 | 1.672 |

* Theoretical

TABLE 3
Phenolic insulations

| Ingredients, phr | 2D | 2A | 2E | XO2646 | MX4926 | 2B |
|---|---|---|---|---|---|---|
| Phenolic resin[1] | 100.0 | 100.0 | 100.0 | — | — | 100.0 |
| Silica[2] | 20.0 | 26.67 | 40.0 | — | — | 40.0 |
| Graphite fiber[3] | 50.0 | — | — | — | — | — |
| Graphite fiber[4] | — | 66.67 | 100.0 | — | — | — |
| Phenolic resin (Mil-R-9299, Type II) | — | — | — | 100.0[5] | 100.0 | — |
| Silica cloth, chopped, 1.27 cm sq | — | — | — | 400.0 | — | — |
| Carbon cloth, chopped 1.27 cm sq | — | — | — | — | 194.1 | — |
| Polyaramide pulp[6] | — | — | — | — | — | 100.0 |

Phenolic-elastomeric insulations

| | 2F | 2C | 2G | 2H | 2J | 2K |
|---|---|---|---|---|---|---|
| Chlorosulfonated polyethylene[7] | 80.0 | 50.0 | 100.0 | 100.0 | 100.0 | 100.0 |
| Liquid polybutadiene[8] | 20.0 | 30.0 | — | — | — | — |
| Polyisoprene[9] | — | 20.0 | — | — | — | — |
| Polyaramide pulp[6] | 50.0 | 50.0 | 200.0 | 1250.0 | 2500.0 | — |
| Starch | 40.0 | 40.0 | 40.0 | 40.0 | 40.0 | 40.0 |
| Magnesia | 6.0 | 2.0 | 6.0 | 6.0 | 6.0 | 6.0 |
| Sulfur accelerator[10] | 2.0 | 1.0 | 2.0 | 2.0 | 1.0 | 1.0 |
| Phenolic resin[1] | 100.0 | 100.0 | 200.0 | 500.0 | 500.0 | 500.0 |
| Peroxy curative[11] | — | 3.75 | — | — | — | — |
| Silica[2] | | | 40.0 | — | — | — |
| Graphite fiber[3] | | | — | — | — | 2500.0 |

[1] Resinox 755, Monsanto.
[2] HiSil, Harwick.
[3] Celion 6, Celanese.
[4] Magnamite, Hercules.
[5] Polyamide modified.
[6] Kevlar 29, DuPont.
[7] Hypalon LP 999, DuPont.
[8] Ricon 150, Colorado Speciality.
[9] Natsyn 2200.
[10] Dipentamethylenethiuriumhexasulfide, DuPont.
[11] 2,5-Dimethyl-2,5-di(t-butylperoxy)hexane.

The words "Resinox", "HiSil", "Magnamite" and "Kevlar" are understood to be registered trade marks. It is not known whether the trade names "Celion", "Hypalon", "Ricon" and "Natsyn" are registered trade marks.

Example 3

Eighteen-kilogram rocket motors were fabricated for testing the blast tube insulators of the invention. The formulations tested were 2B, 2C and 2D of Example 2, Tables 2 and 3.

Billets of these formulations 2B, 2C and 2D were molded. Two billets of each were required for testing: 2.5 inch (6.35 cm) outside diameter by 5 inch (12.7 cm) long, and 6.6 inch (16.76 cm) outside diameter by 2.5 inch (6.35 cm) long. These billets were compression molded in piston-type molds, then cured at 177°C. Blast tube insulator components were machined from the billets and bonded into the blast tube hardware, including ramp section.

The results of firing eighteen-kilogram motors containing these insulators are shown in Table 4. These results are for four motor firings, 1—4, and show Erosion rate (ER) and Decomposition rate (DR).

As can be seen by the results in Table 4, the insulation of this invention performed favorably.

TABLE 4

| Location/ Motor No. | Mass flux velocity | | 2C | | 2B | | 2D | |
|---|---|---|---|---|---|---|---|---|
| | kg/sec-cm² | m/sec | ER | DR | ER | DR | ER | DR |
| Ramp section | | | | | | | | |
| Motor No. 1 | .0392 | .296 | .18 | .18 | | | | |
| | .0492 | 36.9 | .23 | .15 | | | | |
| Motor No. 2 | .0372 | 31.7 | .15 | .13 | | | | |
| | .0475 | 40.2 | .15 | .15 | | | | |
| Blast tube | | | | | | | | |
| Motor No. 2 | .0584 | 44.2 | .30 | .15 | | | | |
| | .1561 | 118 | 1.1 | 1.2 | | | | |
| | .4633 | 370 | 2.3 | 2.3 | | | | |
| Motor No. 3 | .0555 | 47.2 | | | .10 | .18 | | |
| | .1687 | 145 | | .08 | .33 | | | |
| | .5062 | 472 | | | 1.3 | 1.4 | | |
| Motor No. 4 | .0541 | 47.9 | | | | | 0 | .63 |
| | .1659 | 147 | | | | | .13 | .66 |
| | .5941 | 611 | | | | | .30 | .91 |

**Claims**

1. A rigid molded insulator suitable for thermally shielding the blast tube of a rocket motor and formed from a cured phenolic resin composition containing fibrous reinforcement material, characterized in that the fibrous reinforcement material is dispersed in the resin composition and comprises polyaramide pulp or carbon fibers or a combination of said pulp and fibers, and in that for each 100 parts by weight of phenolic resin the insulator contains between 30 and 120 parts by weight of the said reinforcement material and between 10 and 60 parts by weight of a finely divided siliceous inorganic particulate, the insulator having a density between 1.14 and 1.495 $Mg/m^3$.

2. A rigid molded insulator as claimed in claim 1, characterised in that it contains between 40 and 80 parts by weight of polyaramide pulp and between 10 and 30 parts by weight of finely divided siliceous inorganic particulate, per hundred parts by weight of the phenolic resin, the insulator having a density between 1.439 and 1.467 $Mg/m^3$.

3. A rigid molded insulator as claimed in claim 1, characterized in that it contains between 80 and 120 parts by weight of carbon fibers and between 30 and 50 parts by weight of finely divided siliceous inorganic particulate, per hundred parts by weight of the phenolic resin, the insulator having a density between 1.467 and 1.495 $Mg/m^3$.

4. A rigid molded insulator as claimed in claim 1, characterized in that it contains between 40 and 80 parts by weight of carbon fibers that are between 2 and 10 millimeters long, and between 10 and 30 parts by weight of a finely divided siliceous inorganic particulate, per hundred parts by weight of the phenolic resin.

5. A rigid molded insulator as claimed in claim 4, characterized in that the carbon fibres are between 4 and 8 millimeters long.

6. A rigid molded insulator as claimed in claim 1, 4 or 5 characterized by a density between 1.439 and 1.495 $Mg/m^3$.

7. A rigid molded insulator as claimed in any of the preceding claims, characterized in that the phenolic resin composition contains up to 100 parts by weight of a cross-linked elastomeric polymer per hundred parts by weight of the phenolic resin.

8. A rigid molded insulator as claimed in any of the preceding claims, characterized in that the finely divided inorganic particulate comprises silica.

9. A method of preparing the blast tube insulator as claimed in claim 1, 4 or 8, characterized in that a curable precursor for the cured phenolic reisn is admixed with the finely divided, siliceous inorganic particulate and the fibrous reinforcement in the presence of a solvent for the precursor until a molding crumb having a diameter between 4 and 8 millimeters results, the crumb is dried by tumbling in dry air and loaded into a mold, and sufficient pressure to consolidate the crumb is applied to the crumb in the mold at a temperature between 93 and 232°C for a time sufficient to cure the precursor and form the insulator.

## Patentansprüche

1. Steifer, geformter Isolator, der zum thermischen Schutz der Raketenbrennkammer geeignet ist und aus einer gehärteten Phenolharzzusammensetzung, die faseriges Verstärkungsmaterial enthält, gebildet ist, dadurch gekennzeichnet, daß das faserige Verstärkungsmaterial in der Harzzusammensetzung dispergiert ist, und Polyaramid-Pulpe oder Kohlenstoffasern oder eine Kombination dieser Pulpe und der Fasern enthält, und dadurch, daß pro jeweils 100 Gewichtsteile Phenolharz der Isolator zwischen 30 und 120 Gewichtsteile des Verstärkungsmaterials und zwischen 10 und 60 Gewichtsteile eines fein zerteilten, siliziumhaltigen, anorganischen, aus Partikeln bestehenden Stoffes, enthält, wobei der Isolator eine Dichte zwischen 1,14 und 1,495 Mg/m$^3$ aufweist.

2. Steifer, geformter Isolator nach Anspruch 1, dadurch gekennzeichnet, daß er zwischen 40 und 80 Gewichtsteile Polyaramid-Pulpe und zwischen 10 und 30 Gewichtsteile fein zerteilten, siliziumhaltigen, anorganischen, aus Partikeln bestehenden Stoff pro hundert Gewichtsteile des Phenolharzes enthält, wobei der Isolator eine Dichte zwischen 1.439 und 1.467 Mg/m$^3$ aufweist.

3. Steifer, geformter Isolator nach Anspruch 1, dadurch gekennzeichnet, daß er zwischen 80 und 120 Gewichtsteile Kohlenstoffasern und zwischen 30 und 50 Gewichtsteile fein zerteilten, siliziumhaltigen, anorganischen, aus Partikeln bestehenden Stoff pro hundert Gewichtsteile des Phenolharzes enthält, wobei der Isolator eine Dichte zwischen 1,467 und 1,495 Mg/m$^3$ aufweist.

4. Steifer, geformter Isolator nach Anspruch 1, dadurch gekennzeichnet, daß er zwischen 40 und 80 Gewichtsteile Kohlenstoffasern mit einer Länge zwischen 2 und 10 Millimetern und zwischen 10 und 30 Gewichtsteile fein zerteilten, siliziumhaltigen, anorganischen, aus Partikeln bestehenden Stoff pro hundert Gewichtsteile des Phenolharzes enthält.

5. Steifer, geformter Isolator nach Anspruch 4, dadurch gekennzeichnet, daß die Kohlenstoffasern zwischen 4 und 8 Millimeter lang sind.

6. Steifer, geformter Isolator nach Anspruch 1, 4 oder 5, gekennzeichnet durch eine Dichte zwischen 1,439 und 1,495 Mg/m$^3$.

7. Steifer, geformter Isolator nach einem der vorhergehenden Ansprüche, dadurch gekennzeichnet, daß die Phenolharzzusammensetzung bis zu 100 Gewichtsteile eines quervernetzten elastomeren Polymers pro hundert Gewichtsteile des Phenolharzes enthält.

8. Steifer, geformter Isolator nach einem der vorhergehenden Ansprüche, dadurch gekennzeichnet, daß der fein zerteilte, anorganische aus Partikeln bestehende Stoff Kieselsäureanhydrid umfaßt.

9. Verfahren zur Herstellung des Brennkammer-Isolators nach Anspruch 1, 4 oder 8, dadurch gekennzeichnet, daß ein härtbarer Vorläufer für das gehärtete Phenolharz dem fein zerteilten, siliziumhaltigen, anorganischen, aus Partikeln bestehenden Stoff und dem faserigen Verstärkungsmittel in Anwesenheit eines Lösungsmittels für den Vorläufer beigemischt wird, bis ein Formkrümel mit einem Durchmesser zwischen 4 und 8 mm entsteht, der Krümel in trockener Luft durch Trommeln getrocknet und in eine Form geladen wird und, ausreichend Druck zur Verfestigung des Krümels auf den Krümel in der Form bei einer Temperatur zwischen 93 und 232°C für eine Zeit, die ausreichend ist, um den Vorläufer zu härten und den Isolator zu bilden, angewandt wird.

## Revendications

1. Isolateur moulé rigide, convenant comme écran thermique pour la tuyère d'un moteur-fusée et formé en une composition de résine phénolique durcie contenant une matière fibreuse de renfort, caractérisé en ce que la matière fibreuse de renfort est dispersée dans la composition de résine et est faite de pulpe de polyaramide ou de fibres de carbone, et en ce que pour 100 parties en poids de résine phénolique, l'isolateur contient entre 30 et 120 parties en poids de ladite matière de renfort et entre 10 et 60 parties en poids d'une matière inorganique siliceuse particulaire finement divisée, l'isolateur ayant une masse volumique comprise entre 1,14 et 1,495 Mg/m$^3$.

2. Isolateur moulé rigide selon la revendication 1, caractérisé en ce qu'il contient entre 40 et 80 parties en poids de pulpe de polyaramide et entre 10 et 30 parties en poids de matière inorganique siliceuse particulaire finement divisée pour 100 parties en poids de la résine phénolique, l'isolateur ayant une masse volumique comprise entre 1,439 et 1,467 Mg/m$^3$.

3. Isolateur moulé rigide selon la revendication 1, caractérisé en ce qu'il contient entre 80 et 120 parties en poids de fibres de carbone et entre 30 et 50 parties en poids de matière inorganique siliceuse particulaire finement divisée pour 100 parties en poids de la résine phénolique, l'isolateur ayant une masse volumique comprise entre 1,467 et 1,495 Mg/m$^3$.

4. Isolateur moulé rigide selon la revendication 1, caractérisé en ce qu'il contient entre 40 et 80 parties en poids de fibres de carbone dont la longueur est comprise entre 2 et 10 mm et entre 10 et 30 parties en poids d'une matière inorganique siliceuse particulaire finement divisée, pour 100 parties en poids de la résine phénolique.

5. Isolateur moulé rigide selon la revendication 4, caractérisé en ce que les fibres de carbone ont une longueur comprise entre 4 et 8 mm.

6. Isolateur moulé rigide selon l'une quelconque des revendications 1, 4 et 5, caractérisé par une masse volumique comprise entre 1,439 et 1,495 Mg/m$^3$.

7. Isolateur moulé rigide selon l'une quelconque des revendications 1 à 6, caractérisé en ce que le composition de résine phénolique contient jusqu'à 100 parties en poids d'un polymère élastomère réticulé pour 100 parties en poids de la résine phénolique.

8. Isolateur moulé rigide selon l'une quelconque des revendications 1 à 7, caractérisé en ce que la matière inorganique particulaire finement divisée comprend de la silice.

9. Procédé de préparation de l'isolateur pour tuyère selon l'une quelconque des revendications 1, 4 et 8, caractérisé en ce qu'un précurseur durcissable de la résinephénolique durcie est mélangé avec la matière inorganique siliceuse particulaire finement divisée et la matière fibreuse de renfort en présence d'un solvant pour le précurseur, jusqu'à ce qu'il en résulte un granulé de moulage ayant un diamètre entre 4 et 8 mm, le granulé est séché par tonnelage dans l'air sec et chargé dans un moule, et une pression suffisante pour compacter le granulé est applique à celui-ci dans le moule à une température comprise entre 93 et 232°C pendant un temps suffisant pour durcir le précurseur et former l'isolateur.